# EUROPEAN PATENT SPECIFICATION

(11) **EP 3 798 725 B1**
(45) Date of publication and mention of the grant of the patent: **30.11.2022**
(21) Application number: 20789817.2
(22) Date of filing: 28.04.2020
(51) Int. Cl.: G03B 17/56, F16M 11/14, F16C 11/06

(54) **TWO-DEGREE-OF-FREEDOM AND THREE-DEGREE-OF-FREEDOM CONVERTIBLE SPHERICAL JOINT STRUCTURE**
UMWANDELBARE KUGELGELENKANORDNUNG MIT ZWEI FREIHEITSGRADEN UND DREI FREIHEITSGRADEN
STRUCTURE DE JOINT SPHÉRIQUE CONVERTIBLE À DEUX DEGRÉS DE LIBERTÉ ET À TROIS DEGRÉS DE LIBERTÉ

(30) Priority: 26.07.2019 CN 201910682831
(43) Date of publication of application: 31.03.2021
(73) Proprietor: UNI-WAY RESOURCE CO., LTD., Shenzhen, Guangdong 518048 (CN)
(72) Inventor: BAN, Zhaoming, Guangdong 518048 (CN)
(74) Representative: Cleanthous, Marinos
(86) International application number: PCT/CN2020/087421
(87) International publication number: WO 2021/017552

(56) References cited:
- EP-A2- 2 549 170
- CN-A- 108 474 512
- CN-A- 108 474 512
- CN-A- 110 410 414
- CN-U- 201 554 997
- CN-U- 203 147 204
- CN-U- 207 674 045
- DE-A1- 19 629 491

## Description

### TECHNICAL FIELD

The present invention relates to the technical field of ball joints, in particular to a two-degree-of-freedom and three-degree-of-freedom switchable ball joint structure.

### BACKGROUND

Ball joints are one of the very common structures in mechanical structures, see for example CN108474512A, which are widely used in steering coupling, support, space adjustment and other mechanisms. One of the most common applications is the pan-tilt of cameras and video cameras, and is used for coupling, directional video cameras (cameras). However, most of the current ball joints have three degrees of freedom, which cannot achieve stable spatial positioning control. For example, a spherical cloud cannot achieve stable control of the horizontal plane of the picture during dynamic shooting. Therefore, it is necessary to study a two-degree-of-freedom and three-degree-of-freedom switchable ball joint structure.

### SUMMARY

In view of the shortcomings in the above technology, the present invention provides a two-degree-of-freedom and three-degree-of-freedom switchable ball joint structure with a simple structure and convenient adjustment.

The technical solution adopted by the present invention to solve its technical problem is as follows: a two-degree-of-freedom and three-degree-of-freedom switchable ball joint structure, comprising: an outer shell with an accommodating cavity; a hollow sphere, which is located in the accommodating cavity of the outer shell and is rotatable in the accommodating cavity, wherein the lower hemispherical surface of the sphere is provided with a groove with a symmetrical center plane located on the vertical center plane of the sphere; a limiting pin, which is vertically inserted in the outer shell and located below the sphere, and the axis line of which passes through the center of the sphere; a first worm gear assembly, which is provided in the outer shell for driving the limiting pin to make a linear reciprocating motion in the vertical direction; wherein the first worm gear assembly drives the top of the limiting pin to be inserted into or exit from the groove to realize the adjustment of the degree of freedom of rotation of the sphere.

Preferably, the first worm gear assembly comprises a first worm gear and a first worm, a first worm gear cavity and a first worm cavity which are communicated with each other are formed in the outer shell, an anti-rotation hole in which the limiting pin is inserted into is further formed in the outer shell, the anti-rotation hole is communicated with the accommodating cavity of the outer shell located thereabove and the first worm gear cavity located therebelow, the limiting pin comprises a cylinder which is inserted in the anti-rotation hole and a short pin which is formed on the top of the cylinder and is insertable into the sphere, wherein the first worm gear is threadedly connected to the cylinder, and a rotation stopping plane matched with the anti-rotation hole is further formed on the outer circumferential wall of the cylinder.

Preferably, the outer shell comprises a base shell formed with the accommodating cavity and a top ring clamped on the open end of the top of the base shell, wherein a dustproof pad is sandwiched between the top ring and the spherical surface of the sphere, an annular groove is formed on the inner ring wall of the dustproof pad, and the aperture value M of the top of the inner ring of the dustproof pad is smaller than the diameter value N of the spherical surface corresponding to the top of the dustproof pad on the sphere, so that the top of the dustproof pad is tensioned on the sphere under the action of the annular groove.

Preferably, the two-degree-of-freedom and three-degree-of-freedom switchable ball joint structure further comprises a ball seat located in an accommodating cavity of the outer shell for supporting the sphere, and a lining is sandwiched between the ball seat and the ball, wherein a first through hole, through which the limiting pin passes, is formed at the bottom of the ball seat and the lining respectively.

Preferably, the two-degree-of-freedom and three-degree-of-freedom switchable ball joint structure further comprises a second worm gear assembly provided on the outer shell for adjusting the size of the gap between the ball seat and the lining to lock and position the sphere.

Preferably, the second worm gear assembly comprises a second worm gear provided at the bottom of the accommodating cavity of the outer shell, a second worm located in the outer shell and meshing with the second worm gear, and a triple helical surface spacer fastened to the top of the second worm gear, wherein a triple helical surface convex ring that abuts against the triple helical surface spacer is formed at the bottom of the ball seat, the triple helical surface spacer and the triple helical surface convex ring cooperate up and down to form a hollow cylinder, and when the second worm gear drives the triple helical surface spacer to rotate under the action of the second worm, and the triple helical surface spacer forces the triple helical surface convex ring to rise so that the ball seat is abutted below the sphere.

Preferably, a plurality of guide openings are also formed on the top edge of the ball seat, and a plurality of vertical guide posts corresponding to the guide opening are formed on the cavity wall of the accommodating cavity of the outer shell.

Preferably, the triple helical surface spacer comprises a base ring, the upper part of the base ring is equally divided into three circular arc blocks, a first helical surface is formed at the top of the circular arc blocks; the triple helical surface convex ring comprises a convex ring body, the lower part of the convex ring body is equally divided into three circular arc blocks, and a second helical surface that conforms with the first helical surface is formed at the bottom of the circular arc blocks.

Preferably, the two-degree-of-freedom and three-degree-of-freedom switchable ball joint structure further comprises a torsion spring assembly which is provided in the hollow cavity of the sphere and matches with the top of the limiting pin so that the sphere is reset.

Preferably, the torsion spring assembly comprises a torsion spring seat fastened to the hollow cavity of the sphere, a torsion spring having a first support arm and a second support arm and pivotally connected to the torsion spring seat through a pivot shaft, and a limiting bolt fastened to the torsion spring seat and located between the first support arm and the second support arm, wherein the pivot axis of the torsion spring is perpendicular to the vertical center plane where the groove is located, when the top of the limiting pin is inserted into the groove and rotates the sphere, the limiting pin pushes the first support arm or the second support arm along the distribution direction of the groove.

Compared with the prior art, the present invention has the beneficial effects that: the two-degree-of-freedom and three-degree-of-freedom switchable ball joint structure provided by the present invention drives the limiting pin to be inserted into or exit from the groove of the sphere to realize the adjustment of the degree of freedom of rotation of the sphere. When the limiting pin is inserted into the groove, the sphere has two degrees of freedom. When the limiting pin exits from the groove, the sphere has three degrees of freedom, which can realize the stable spatial positioning control. The two-degree-of-freedom and three-degree-of-freedom switchable ball joint structure has the advantages of simple structure and convenient adjustment.

The second worm gear assembly can adjust the size of the gap between the ball seat and the lining to lock and position the sphere. The second worm gear assembly adopts a triple helical surface spacer and a triple helical surface convex ring to adjust the support structure, so that a continuously changing resistance and a strong locking force can also be provided and the stable spatial positioning control can be realized while ensuring the centering rotation of the sphere. The two-degree-of-freedom and three-degree-of-freedom switchable ball joint structure has the advantages of simple structure and convenient adjustment.

The torsion spring assembly can make the sphere have better dynamic balance performance.

The annular groove is provided on the dustproof pad, so that the dustproof pad can be better tensioned on the sphere, and it has a better dustproof sealing effect.

### BRIEF DESCRIPTION OF THE DRAWINGS

FIG. 1 is a schematic diagram of the structure of a two-degree-of-freedom and three-degree-of-freedom switchable ball joint structure according to the present invention;
FIG. 2 is an exploded diagram of the structure of a ball joint structure with two degrees of freedom and three degrees of freedom according to the present invention;
FIG. 3 is a schematic cross-sectional diagram of the structure of a two-degree-of-freedom and three-degree-of-freedom switchable ball joint structure according to the present invention;
FIG. 4 is a schematic diagram of an enlarged structure of area A in FIG. 3;
FIG. 5 is a schematic diagram of the positional relationship between a limiting pin and a first worm gear assembly according to the present invention;
FIG. 6 is a schematic diagram of the structure of a top ring according to the present invention;
FIG. 7 is a schematic cross-sectional diagram of the structure of a dustproof pad according to the present invention;
FIG. 8 is a schematic cross-sectional diagram of the structure of a sphere according to the present invention;
FIG. 9 is a schematic diagram of the structure of a sphere according to the present invention;
FIG. 10 is a schematic diagram of the structure of a base shell according to the present invention in a plan view direction;
FIG. 11 is a schematic diagram of the structure of a base shell according to the present invention in a bottom view direction;
FIG. 12 is a schematic cross-sectional diagram of the structure of a base shell according to the present invention;
FIG. 13 is a schematic diagram of an exploded structure between a ball seat, a lining and a second worm gear assembly according to the present invention;
FIG. 14 is a schematic diagram of the structure of a ball seat according to the present invention;
FIG. 15 is a schematic diagram of the structure of a triple helical surface spacer according to the present invention;
FIG. 16 is a schematic diagram of an enlarged structure of area B in FIG. 2;
FIG. 17 is a schematic diagram of the structure of a torsion spring assembly according to the present invention;
FIG. 18 is a schematic diagram of an exploded structure of a torsion spring assembly according to the present invention;
FIG. 19 is a schematic diagram of the positional relationship between a torsion spring assembly and a limiting pin according to the present invention.

In the figures: 10, sphere; 11, groove; 20, limiting pin; 21, cylinder; 211, rotation stopping plane; 22, short pin; 23, truncated cone; 30, first worm gear assembly; 31, first worm gear; 32, first worm; 40, outer shell; 41, base shell; 411, anti-rotation hole; 412, first worm gear cavity; 413, first worm cavity; 414, second worm cavity; 415, guide post; 416, boss; 42, top ring; 421, shoulder; 422, rib; 43, bottom cover; 50, dustproof pad; 51, annular groove; 60, ball seat; 61, triple helical surface convex ring; 62, guide opening; 63, ring cylinder; 70, lining; 80, second worm gear assembly; 81, second worm gear; 82, second worm; 83, plane bearing; 84, triple helical surface spacer; 85 second limiting post, 90, torsion spring assembly; 91, torsion spring seat; 92, torsion spring; 921, first support arm; 922, second support arm; 93, pivot shaft; 94, limiting bolt; 95, torsion spring bolt.

### DESCRIPTION OF THE EMBODIMENTS

The present invention will be further described in detail hereinafter with reference to the accompanying drawings, so that those skilled in the art can implement it with reference to the text of the description.

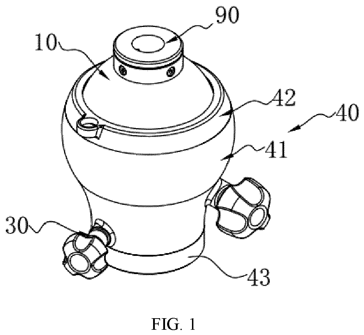

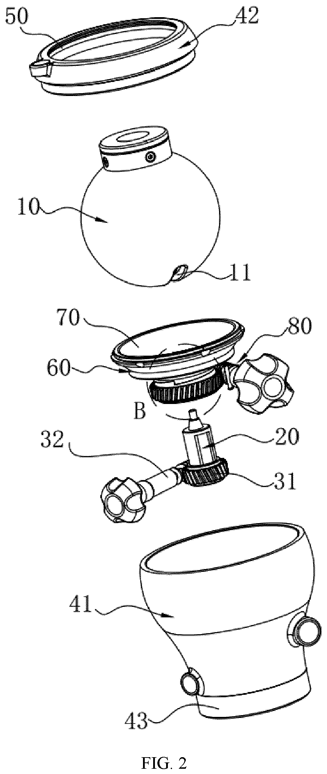

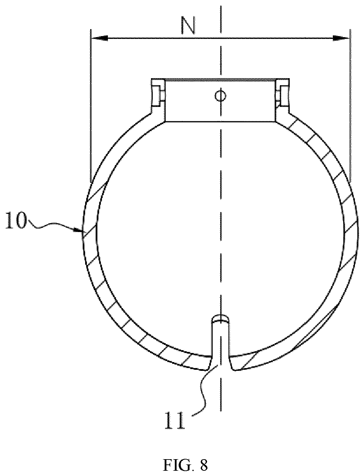

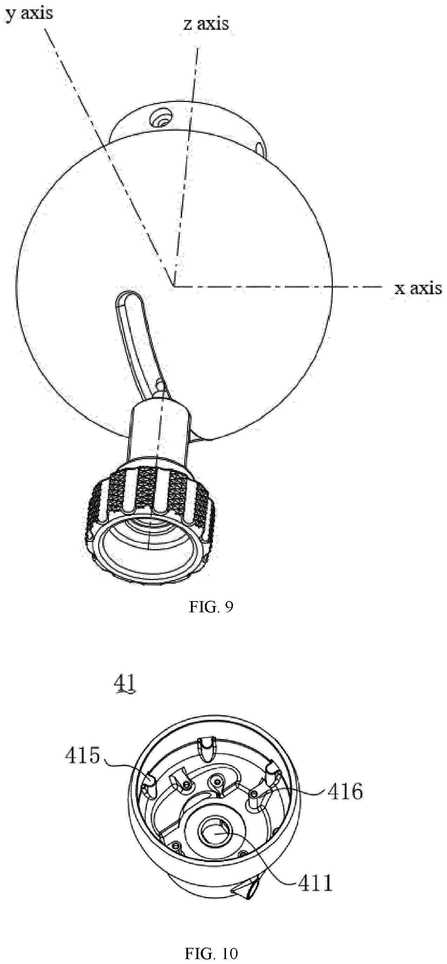

As shown in FIGS. 1 to 19, the present invention provides a two-degree-of-freedom and three-degree-of-freedom switchable ball joint structure, comprising: an outer shell 40 with an accommodating cavity; a hollow sphere 10, which is located in the accommodating cavity of the outer shell 40 and is rotatable in the accommodating cavity, wherein as shown in FIGS. 8 and 9, more than half of the spherical surface of the sphere 10 is located in the accommodating cavity of the outer shell 40, that is, the majority of the sphere 10 is located in the accommodating cavity of the outer shell 40, the lower hemispherical surface of the sphere 10 is provided with a groove 11 with a symmetrical center plane located on the vertical center plane of the sphere 10, the groove 11 is an elongated groove provided along the spherical surface of the sphere 10; a limiting pin 20, which is vertically inserted in the outer shell 40 and located below the sphere 10, and the axis line of which passes through the center of the sphere 10; a first worm gear assembly 30, which is provided in the outer shell 40 for driving the limiting pin 20 to make a linear reciprocating motion in the vertical direction; wherein as shown in FIGS. 1 to 3, the outer shell 40 limits the translational degree of freedom of the X-axis, Y-axis and Z-axis of the sphere 10, and the first worm gear assembly 30 drives the top of the limiting pin 20 to be inserted into or exit from the groove 11 to realize the adjustment of the two degrees of freedom of rotation and three degrees of freedom of rotation of the sphere 10. When the top of the limiting pin 20 is inserted into the groove 11, the sphere 10 can only rotate with two degrees of freedom along the groove 11 and around the limiting pin 20, that is, the sphere 10 is restricted with one axial degree of freedom of rotation, and the sphere 10 has only two degrees of freedom of rotation. Specifically, as shown in FIG. 9, if the symmetrical center plane of the groove 11 is the YZ plane, at this time, the limiting pin 20 restricts the degree of freedom of rotation of the sphere 10 along the Y axis. If the symmetrical center plane of the groove 11 is the XZ plane, at this time, the limiting pin 20 restricts the degree of freedom of rotation of the sphere 10 along the X axis; and when the top of the limiting pin 20 exits from the groove 11, the sphere 10 has three degrees of freedom of rotation. At this time, the sphere 10 can rotate along the X axis, the Y axis and the Z axis.

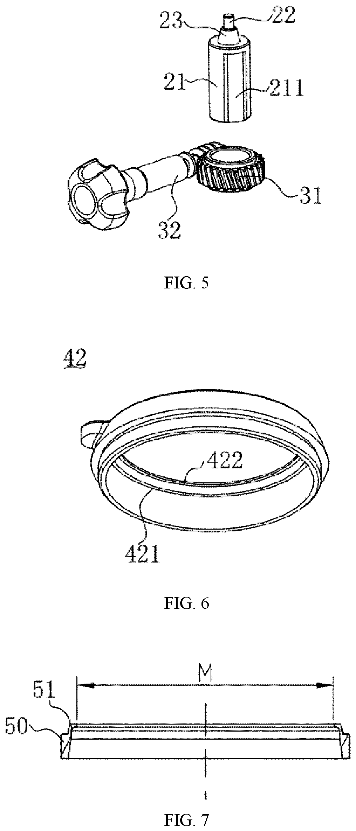

As an embodiment of this solution, as shown in FIG. 5, FIG. 10, FIG. 11 and FIG. 12, the first worm gear assembly 30 comprises a first worm gear 31 and a first worm 32, a first worm gear cavity 412 and a first worm cavity 413 which are communicated with each other are formed in the outer shell 40, an anti-rotation hole 411 in which the limiting pin 20 is inserted into is further formed in the outer shell 40, the anti-rotation hole 411 is communicated with the accommodating cavity of the outer shell 40 located thereabove and the first worm gear cavity 412 located therebelow, the limiting pin 20 comprises a cylinder 21 which is inserted in the anti-rotation hole 411 and a short pin 22 which is formed on the top of the cylinder 21 and is insertable into the sphere 10, wherein the first worm gear 31 is threadedly connected to the cylinder 21, an internal thread is provided on the inner wall of the first worm gear 31, and an external thread that matches with the internal thread is provided on the cylinder 21. In this solution, the first worm gear cavity 412 is a cylindrical cavity, and the first worm gear 31 is limited in the first worm gear cavity 412. One end of the first worm 32 extends to the outside of the outer shell 40. A hand wheel is provided on the end of the first worm 32 extending to the outside of the outer shell 40. A rotation stopping plane 211 matched with the anti-rotation hole 411 is further formed on the outer circumferential wall of the cylinder 21. When the first worm 32 is rotated, the first worm gear 31 rotates with the rotation of the first worm 32. The first worm gear 31 is threadedly connected to the cylinder 21. When the first worm gear 31 rotates, the cylinder 21 moves up and down in the anti-rotation hole 411, thereby realizing the movement that the short pin 22 is inserted into or exits from the sphere 10.

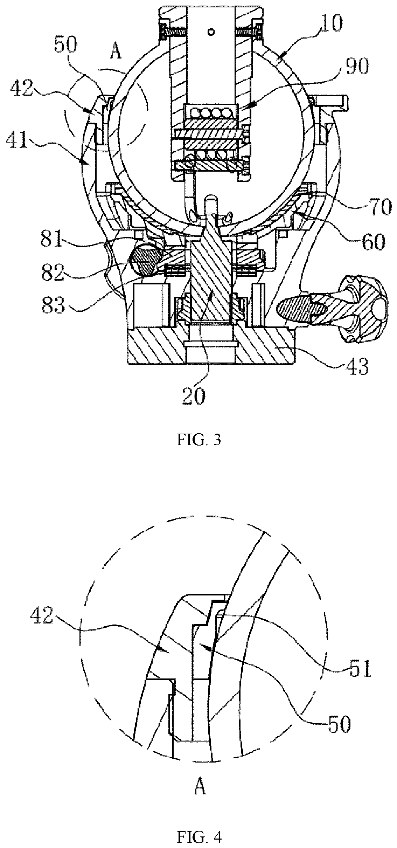

As an embodiment of this solution, as shown in FIGS. 3 and 5, a truncated cone 23 is formed between the cylinder 21 and the short pin 22, and the truncated cone 23 is matched with the groove 11. When the short pin 22 is inserted into the sphere 10, the truncated cone 23 conforms into the groove 11, and coincides with the V-shaped cross section of the groove 11, which can also adjust and compensate the gap between the groove 11 and the truncated cone 23 while limiting the degree of freedom.

As an embodiment of this solution, as shown in FIGS. 1 to 3, the outer shell 40 comprises a base shell 41 formed with the accommodating cavity and a top ring 42 clamped on the open end of the top of the base shell 41, wherein as shown in FIG. 3, FIG. 4 and FIG. 7, a dustproof pad 50 is sandwiched between the top ring 42 and the spherical surface of the sphere 10, and an annular groove 51 is formed on the inner ring wall of the dustproof pad 50. As shown in FIGS. 7 and 8, the aperture value M of the top of the inner ring of the dustproof pad 50 is smaller than the diameter value N of the spherical surface corresponding to the top of the dustproof pad 50 on the sphere 10, so that the top of the dustproof pad 50 is tensioned on the sphere 10 under the action of the annular groove 51; in this solution, as shown in FIGS. 10, 11 and 12, the first worm gear cavity 412, the first worm cavity 413, and the anti-rotation hole 411 are all formed on the base shell 41, and the first worm gear cavity 412 is formed at the bottom of the base shell 41. A bottom cover 43 for sealing the first worm gear 31 in the first worm gear cavity 412 is also detachably provided on the bottom end surface of the base shell 41. When the first worm 32 is rotated, the first worm gear 31 rotates in the first worm gear cavity 412 when being driven by the first worm 32. The purpose of providing the bottom cover 43 is to facilitate the installation of the first worm gear 31.

As an embodiment of this solution, as shown in FIG. 6, a shoulder 421 for clamping the dustproof pad 50 is formed on the inner ring wall of the top ring 42, and a rib 422 for limiting the position of the dustproof pad 50 is formed at the top of the inner ring of the top ring 42, which has the advantages of simple structure and convenient installation.

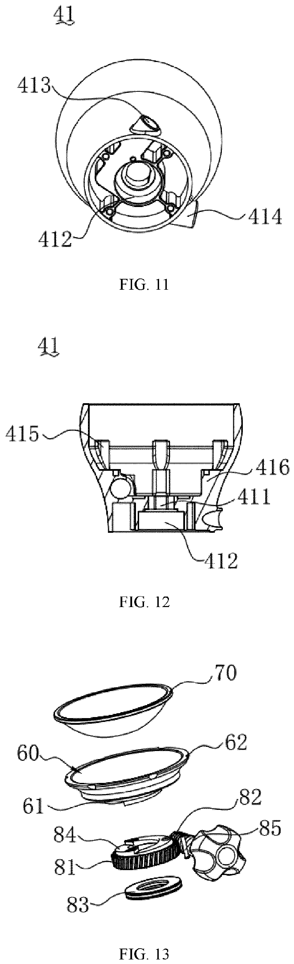

As an embodiment of this solution, as shown in FIGS. 13 to 16, the two-degree-of-freedom and three-degree-of-freedom switchable ball joint structure further comprises a ball seat 60 located in an accommodating cavity of the outer shell 40 for supporting the sphere 10, and a lining 70 is sandwiched between the ball seat 60 and the ball 10, wherein a first through hole, through which the limiting pin 20 passes, is formed at the bottom of the ball seat 60 and the lining 70 respectively. The ball seat 60 and the lining 70 are both bowl-shaped. A ring cylinder 63 with a flat bottom end surface is formed on the outer wall of the ball seat 60, and a plurality of bosses 416 for supporting the ring cylinder 63 are formed in the accommodating cavity of the outer shell 40, which has the advantage of convenient positioning.

As an embodiment of this solution, as shown in FIGS. 13 to 16, the two-degree-of-freedom and three-degree-of-freedom switchable ball joint structure further comprises a second worm gear assembly 80 provided on the outer shell 40 for adjusting the size of the gap between the ball seat 60 and the lining 70 to lock and position the sphere 10.

As an embodiment of this solution, as shown in FIGS. 11 to 13, the second worm gear assembly 80 comprises a second worm gear 81 provided at the bottom of the accommodating cavity of the outer shell 40 through a plane bearing 83, a second worm 82 located in the outer shell 40 and meshing with the second worm gear 81, and a triple helical surface spacer 84 fastened to the top of the second worm gear 81, wherein a second worm cavity 414 accommodating the second worm 82 is formed in the outer shell 40. One end of the second worm 82 extends to the outside of the outer shell 40. A hand wheel is provided on the end of the second worm 82 extending to the outside of the outer shell 40. A second limiting post 85 for limiting the position of the second worm 82 in the second worm cavity 414 is inserted in the second worm cavity 414. A second limiting groove for clamping the second limiting post 85 is provided on the second worm 82. Similarly, a first limiting post (not shown) for limiting the position of the first worm 32 is inserted in the first worm cavity 413, and the first worm 32 is provided with a first limiting groove (not shown) for clamping the first limiting post. A triple helical surface convex ring 61 that abuts against the triple helical surface spacer 84 is formed at the bottom of the ball seat 60, the triple helical surface spacer 84 and the triple helical surface convex ring 61 cooperate up and down to form a hollow cylinder, and the second worm gear 81 rotates in the accommodating cavity of the outer shell 40 when being driven by the second worm 82. When the second worm gear 81 drives the triple helical surface spacer 84 to rotate under the action of the second worm 82, the triple helical surface spacer 84 forces the triple helical surface convex ring 61 to rise so that the ball seat 60 is abutted below the sphere 10 to achieve the purpose of locking the sphere 10; in this solution, the ball seat 60 is a carrier of the centering rotation of the sphere 10. The second worm gear assembly 80 adopts the triple helical surface spacer 84 and the triple helical surface convex ring 61 to adjust the support structure, so that a continuously changing resistance and a strong locking force can also be provided while ensuring the centering rotation of the sphere 10.

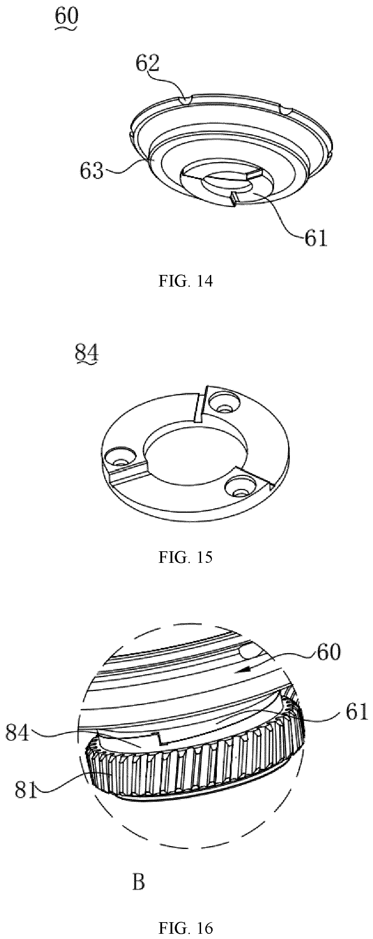

As an embodiment of this solution, as shown in FIGS. 10 and 14, a plurality of guide openings 62 are also formed on the top edge of the ball seat 60, and a plurality of vertical guide posts 415 corresponding to the guide opening 62 are formed on the cavity wall of the accommodating cavity of the outer shell 40, which has the advantages of smooth and reliable movement.

As an example of this solution, as shown in FIG. 15, the triple helical surface spacer 84 comprises a base ring, the upper part of the base ring is equally divided into three circular arc blocks, a first helical surface is formed at the top of the circular arc blocks; as shown in FIG. 14, the triple helical surface convex ring 61 comprises a convex ring body, the lower part of the convex ring body is equally divided into three circular arc blocks, and a second helical surface that conforms with the first helical surface is formed at the bottom of the circular arc blocks; in this solution, the purpose of setting the number of the first helical surfaces and the second helical surfaces to three is as follows: making the up and down movement of the ball seat 60 more planar and reliable, and preventing the ball seat 60 from tilting to the left and right in the horizontal direction during the ascending or descending process.

As an embodiment of this solution, as shown in FIG. 3, the two-degree-of-freedom and three-degree-of-freedom switchable ball joint structure further comprises a torsion spring assembly 90 which is provided in the hollow cavity of the sphere 10 and matches with the top of the limiting pin 20 so that the sphere 10 is reset. The torsion spring assembly 90 enables the sphere 10 to have a better dynamic balance performance.

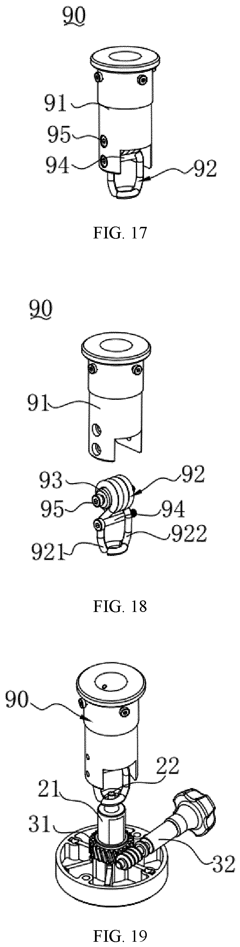

As an embodiment of the present solution, as shown in FIGS. 17 to 19, the torsion spring assembly 90 comprises a torsion spring seat 91 fastened to the hollow cavity of the sphere 10, a torsion spring 92 having a first support arm 921 and a second support arm 922 and pivotally connected to the torsion spring seat 91 through a pivot shaft 93, and a limiting bolt 94 fastened to the torsion spring seat 91 and located between the first support arm 921 and the second support arm 922, wherein a mounting opening is formed on the top of the sphere 10. The mounting opening and the groove 11 are located on opposite sides of the sphere 10. The torsion spring seat 91 is inserted into the hollow cavity of the sphere 10 through the mounting opening. The top of the torsion spring seat 91 is fastened to the mounting opening by bolts. The pivot shaft 93 is provided on the torsion spring seat 91 by a torsion spring bolt 95. The pivot axis of the torsion spring 92 is perpendicular to the vertical center plane where the groove 11 is located. When the top of the limiting pin 20 is inserted into the groove 11 and rotates the sphere 10, the limiting pin 20 pushes the first support arm 921 or the second support arm 922 along the distribution direction of the groove 11 so as to form a reverse balanced elastic force. Specifically, the first support arm 921 or the second support arm 922 will generate an elastic restoring force after being pushed due to deformation. The elastic restoring force is the reverse balanced elastic force. The sphere 10 returns to the central balance position and is reset under the action of the reverse balanced elastic force. The reverse balanced elastic force increases as the rotation angle of the first support arm 921 or the second support arm 922 increases, which has the advantage of a good dynamic balance performance; the limiting bolt 94 makes the first support arm 921 and the second support arm 922 located on opposite sides thereof, thereby restricting the rotation range of the first support arm 921 and the second support arm 922. If the limiting bolt 94 is not provided, when the limiting pin 20 pushes the first support arm 921, the second support arm 922 will rotate together with the first support arm 921, and the first support arm 921 cannot generate an elastic restoring force that promotes the resetting of the sphere 10; a circular arc bending part is formed at the position where the bottom of the first support arm 921 and the second support arm 922 is contact with the limiting pin 20. The circular arc bending part enables the limiting pin 20 to better push the first support arm 921 and the second support arm 922. When the top of the limiting pin 20 is inserted into the groove 11 and rotates the sphere 10, the first support arm 921 and the second support arm 922 are located on opposite sides of the short pin 22 of the limiting pin 20, respectively, and the truncated cone 23 is located in the groove 11.

Although the embodiments of the present invention have been disclosed as above, they are not limited to the applications listed in the description and embodiments, and can be applied to various fields suitable for the present invention. those familiar with the field can easily implement other modifications, so that the present invention is not limited to the specific details and the illustrations shown and described herein without departing from the general concept defined by the claims and the equivalent scope.

## Claims

1. A two-degree-of-freedom and three-degree-of-freedom switchable ball joint structure, comprising:
an outer shell (40) with an accommodating cavity;
a hollow sphere (10), which is located in the accommodating cavity of the outer shell (40) and is rotatable in the accommodating cavity, wherein the lower hemispherical surface of the sphere (10) is provided with a groove (11) with a symmetrical center plane located on the vertical center plane of the sphere (10);
a limiting pin (20), which is vertically inserted in the outer shell (40) and located below the sphere (10), and the axis line of which passes through the center of the sphere (10);
a first worm gear assembly (30), which is provided in the outer shell (40) for driving the limiting pin (20) to make a linear reciprocating motion in the vertical direction;
wherein the first worm gear assembly (30) drives the top of the limiting pin (20) to be inserted into or exit from the groove (11) to realize the adjustment of the degree of freedom of rotation of the sphere (10);
the two-degree-of-freedom and three-degree-of-freedom switchable ball joint structure further comprises a torsion spring assembly (90) which is provided in the hollow cavity of the sphere (10) and matches with the top of the limiting pin (20) so that the sphere (10) is reset;
the torsion spring assembly (90) comprises a torsion spring seat (91) fastened to the hollow cavity of the sphere (10), a torsion spring (92) having a first support arm (921) and a second support arm (922) and pivotally connected to the torsion spring seat (91) through a pivot shaft (93), and a limiting bolt (94) fastened to the torsion spring seat (91) and located between the first support arm (921) and the second support arm (922), wherein the pivot axis of the torsion spring (92) is perpendicular to the vertical center plane where the groove (11) is located, when the top of the limiting pin (20) is inserted into the groove (11) and rotates the sphere (10), the limiting pin (20) pushes the first support arm (921) or the second support arm (922) along the distribution direction of the groove (11).

2. The two-degree-of-freedom and three-degree-of-freedom switchable ball joint structure according to claim 1, wherein the first worm gear assembly (30) comprises a first worm gear (31) and a first worm (32), a first worm gear cavity (412) and a first worm cavity (413) which are communicated with each other are formed in the outer shell (40), an anti-rotation hole (411) in which the limiting pin (20) is inserted into is further formed in the outer shell (40), the anti-rotation hole (411) is communicated with the accommodating cavity of the outer shell (40) located thereabove and the first worm gear cavity (412) located therebelow, the limiting pin (20) comprises a cylinder (21) which is inserted in the anti-rotation hole (411) and a short pin (22) which is formed on the top of the cylinder (21) and is insertable into the sphere (10), wherein the first worm gear (31) is threadedly connected to the cylinder (21), and a rotation stopping plane (211) matched with the anti-rotation hole (411) is further formed on the outer circumferential wall of the cylinder (21).

3. The two-degree-of-freedom and three-degree-of-freedom switchable ball joint structure according to claim 1, wherein the outer shell (40) comprises a base shell (41) formed with the accommodating cavity and a top ring (42) clamped on the open end of the top of the base shell (41), wherein a dustproof pad (50) is sandwiched between the top ring (42) and the spherical surface of the sphere (10), an annular groove (51) is formed on the inner ring wall of the dustproof pad (50), and the aperture value M of the top of the inner ring of the dustproof pad (50) is smaller than the diameter value N of the spherical surface corresponding to the top of the dustproof pad (50) on the sphere (10), so that the top of the dustproof pad (50) is tensioned on the sphere (10) under the action of the annular groove (51).

4. The two-degree-of-freedom and three-degree-of-freedom switchable ball joint structure according to claim 1, further comprising a ball seat (60) located in an accommodating cavity of the outer shell (40) for supporting the sphere (10), and a lining (70) is sandwiched between the ball seat (60) and the sphere (10), wherein a first through hole, through which the limiting pin (20) passes, is formed at the bottom of the ball seat (60) and the lining (70) respectively.

5. The two-degree-of-freedom and three-degree-of-freedom switchable ball joint structure according to claim 4, further comprising a second worm gear assembly (80) provided on the outer shell (40) for adjusting the size of the gap between the ball seat (60) and the lining (70) to lock and position the sphere (10).

6. The two-degree-of-freedom and three-degree-of-freedom switchable ball joint structure according to claim 5, wherein the second worm gear assembly (80) comprises a second worm gear (81) provided at the bottom of the accommodating cavity of the outer shell (40), a second worm (82) located in the outer shell (40) and meshing with the second worm gear (81), and a triple helical surface spacer (84) fastened to the top of the second worm gear (81), wherein a triple helical surface convex ring (61) that abuts against the triple helical surface spacer (84) is formed at the bottom of the ball seat (60), the triple helical surface spacer (84) and the triple helical surface convex ring (61) cooperate up and down to form a hollow cylinder, and when the second worm gear (81) drives the triple helical surface spacer (84) to rotate under the action of the second worm (82), the triple helical surface spacer (84) forces the triple helical surface convex ring (61) to rise so that the ball seat (60) is abutted below the sphere (10).

7. The two-degree-of-freedom and three-degree-of-freedom switchable ball joint structure according to claim 6, wherein a plurality of guide openings (62) are also formed on the top edge of the ball seat (60), and a plurality of vertical guide posts (415) corresponding to the guide opening (62) are formed on the cavity wall of the accommodating cavity of the outer shell (40).

8. The two-degree-of-freedom and three-degree-of-freedom switchable ball joint structure according to claim 6, wherein the triple helical surface spacer (84) comprises a base ring, the upper part of the base ring is equally divided into three circular arc blocks, a first helical surface is formed at the top of the circular arc blocks; the triple helical surface convex ring (61) comprises a convex ring body, the lower part of the convex ring body is equally divided into three circular arc blocks, and a second helical surface that conforms with the first helical surface is formed at the bottom of the circular arc blocks.

## Patentansprüche

1. Umschaltbare Kugelgelenkanordnung mit zwei Freiheitsgraden und drei Freiheitsgraden, umfassend:
eine Außenhülle (40) mit einem Aufnahmehohlraum;
eine Hohlkugel (10), die sich in dem Aufnahmehohlraum der Außenhülle (40) befindet und in dem Aufnahmehohlraum drehbar ist, wobei die untere Halbkugeloberfläche der Kugel (10) mit einer Nut (11) mit einer symmetrischen Mittelebene versehen ist, die sich auf der vertikalen Mittelebene der Kugel (10) befindet;
einen Begrenzungsstift (20), der vertikal in die Außenhülle (40) eingesetzt ist und sich unterhalb der Kugel (10) befindet und dessen Achslinie durch den Mittelpunkt der Kugel (10) verläuft;
eine erste Schneckenradbaugruppe (30), die in der Außenhülle (40) bereitgestellt ist, um den Begrenzungsstift (20) anzutreiben, um eine lineare Hin- und Herbewegung in der vertikalen Richtung auszuführen;
wobei die erste Schneckenradbaugruppe (30) die Oberseite des Begrenzungsstifts (20) antreibt, um in die Nut (11) eingesetzt zu werden oder aus dieser auszutreten, um die Einstellung des Freiheitsgrads der Drehung der Kugel (10) zu realisieren;
die umschaltbare Kugelgelenkanordnung mit zwei Freiheitsgraden und drei Freiheitsgraden ferner eine Torsionsfederbaugruppe (90) umfasst, die in dem hohlen Hohlraum der Kugel (10) bereitgestellt ist und mit der Oberseite des Begrenzungsstifts (20) zusammenpasst, sodass die Kugel (10) zurückgesetzt wird;
die Torsionsfederbaugruppe (90) einen an dem hohlen Hohlraum der Kugel (10) befestigten Torsionsfedersitz (91), eine Torsionsfeder (92), die einen ersten Stützarm (921) und einen zweiten Stützarm (922) aufweist und durch eine Schwenkwelle (93) schwenkbar mit dem Torsionsfedersitz (91) verbunden ist, und einen Begrenzungsbolzen (94), der an dem Torsionsfedersitz (91) befestigt ist und sich zwischen dem ersten Stützarm (921) und dem zweiten Stützarm (922) befindet, umfasst, wobei die Schwenkachse der Torsionsfeder (92) senkrecht zu der vertikalen Mittelebene ist, in der sich die Nut (11) befindet, wenn die Oberseite des Begrenzungsstifts (20) in die Nut (11) eingesetzt ist und die Kugel (10) dreht, der Begrenzungsstift (20) den ersten Stützarm (921) oder den zweiten Stützarm (922) entlang der Verteilungsrichtung der Nut (11) drückt.

2. Umschaltbare Kugelgelenkanordnung mit zwei Freiheitsgraden und drei Freiheitsgraden nach Anspruch 1, wobei die erste Schneckenradbaugruppe (30) ein erstes Schneckenrad (31) und eine erste Schnecke (32) umfasst, ein erster Schneckenradhohlraum (412) und ein erster Schneckenhohlraum (413), die miteinander in Verbindung stehen, in der Außenhülle (40) ausgebildet sind, ein Verdrehsicherungsloch (411), in das der Begrenzungsstift (20) eingesetzt ist, ferner in der Außenhülle (40) ausgebildet ist, das Verdrehsicherungsloch (411) mit dem Aufnahmehohlraum der Außenhülle (40), der sich darüber befindet, und dem ersten Schneckenradhohlraum (412), der sich darunter befindet, in Verbindung steht, der Begrenzungsstift (20) einen Zylinder (21), der in das Verdrehsicherungsloch (411) eingesetzt ist, und einen kurzen Stift (22), der an der Oberseite des Zylinders (21) ausgebildet ist und in die Kugel (10) einsetzbar ist, umfasst, wobei das erste Schneckenrad (31) mit dem Zylinder (21) über ein Gewinde verbunden ist und eine Drehstoppebene (211), die mit dem Verdrehsicherungsloch (411) zusammenpasst, ferner an der äußeren Umfangswand des Zylinders (21) ausgebildet ist.

3. Umschaltbare Kugelgelenkanordnung mit zwei Freiheitsgraden und drei Freiheitsgraden nach Anspruch 1, wobei die Außenhülle (40) eine Basishülle (41), die mit dem Aufnahmehohlraum ausgebildet ist, und einen oberen Ring (42), der auf das offene Ende der Oberseite der Basishülle (41) geklemmt ist, umfasst, wobei ein staubdichtes Polster (50) zwischen dem oberen Ring (42) und der Kugeloberfläche der Kugel (10) angeordnet ist, eine ringförmige Nut (51) an der inneren Ringwand des staubdichten Polsters (50) ausgebildet ist und der Durchlasswert M der Oberseite des inneren Rings des staubdichten Polsters (50) kleiner ist als der Durchmesserwert N der Kugel Oberfläche, die der Oberseite des staubdichten Polsters (50) auf der Kugel (10) entspricht, sodass die Oberseite des staubdichten Polsters (50) unter der Einwirkung der ringförmigen Nut (51) auf der Kugel (10) gespannt wird.

4. Umschaltbare Kugelgelenkanordnung mit zwei Freiheitsgraden und drei Freiheitsgraden nach Anspruch 1, ferner umfassend einen Kugelsitz (60), der sich in einem Aufnahmehohlraum der Außenhülle (40) befindet, um die Kugel (10) zu stützen, und eine Auskleidung (70) zwischen dem Kugelsitz (60) und der Kugel (10) angeordnet ist, wobei ein erstes Durchgangsloch, durch das der Begrenzungsstift (20) verläuft, an der Unterseite des Kugelsitzes (60) bzw. der Auskleidung (70) ausgebildet ist.

5. Umschaltbare Kugelgelenkanordnung mit zwei Freiheitsgraden und drei Freiheitsgraden nach Anspruch 4, ferner umfassend eine zweite Schneckenradbaugruppe (80), die an der Außenhülle (40) bereitgestellt ist, um die Größe des Spalts zwischen dem Kugelsitz (60) und der Auskleidung (70) einzustellen, um die Kugel (10) zu arretieren und zu positionieren.

6. Umschaltbare Kugelgelenkanordnung mit zwei Freiheitsgraden und drei Freiheitsgraden nach Anspruch 5, wobei die zweite Schneckenradbaugruppe (80) ein zweites Schneckenrad (81), das an der Unterseite des Aufnahmehohlraums der Außenhülle (40) bereitgestellt ist, eine zweite Schnecke (82), die sich in der Außenhülle (40) befindet und mit dem zweiten Schneckenrad (81) kämmt, und einen Abstandshalter (84) mit Tripelhelixoberfläche, der an der Oberseite des zweiten Schneckenrads (81) befestigt ist, umfasst, wobei ein konvexer Ring (61) mit Tripelhelixoberfläche, der an den Abstandshalter (84) mit Tripelhelixoberfläche angrenzt, an der Unterseite des Kugelsitzes (60) ausgebildet ist, der Abstandshalter (84) mit Tripelhelixoberfläche und der konvexe Ring (61) mit Tripelhelixoberfläche nach oben und unten zusammenwirken, um einen Hohlzylinder auszubilden, und wenn das zweite Schneckenrad (81) den Abstandshalter (84) mit Tripelhelixoberfläche antreibt, damit er sich unter der Einwirkung der zweiten Schnecke (82) dreht, der Abstandshalter (84) mit Tripelhelixoberfläche den konvexen Ring (61) mit Tripelhelixoberfläche dazu drängt, sich anzuheben, sodass unterhalb der Kugel (10) an den Kugelsitz (60) angegrenzt wird.

7. Umschaltbare Kugelgelenkanordnung mit zwei Freiheitsgraden und drei Freiheitsgraden nach Anspruch 6, wobei eine Vielzahl von Führungsöffnungen (62) auch an der Oberkante des Kugelsitzes (60) ausgebildet ist und eine Vielzahl von vertikalen Führungsstangen (415), die der Führungsöffnung (62) entspricht, an der Hohlraumwand des Aufnahmehohlraums der Außenhülle (40) ausgebildet ist.

8. Umschaltbare Kugelgelenkanordnung mit zwei Freiheitsgraden und drei Freiheitsgraden nach Anspruch 6, wobei der Abstandshalter (84) mit Tripelhelixoberfläche einen Basisring umfasst, der obere Teil des Basisrings gleichmäßig in drei kreisförmige Bogenblöcke unterteilt ist, eine erste Helixoberfläche an der Oberseite der kreisförmigen Bogenblöcke ausgebildet ist; der konvexe Ring (61) mit Tripelhelixoberfläche einen konvexen Ringkörper umfasst, der untere Teil des konvexen Ringkörpers gleichmäßig in drei kreisförmige Bogenblöcke unterteilt ist und eine zweite Helixoberfläche, die mit der ersten Helixoberfläche übereinstimmt, an der Unterseite der Kreisbogenblöcke ausgebildet ist.

## Revendications

1. Structure de joint à rotule commutable à deux degrés de liberté et à trois degrés de liberté, comprenant :
une coque externe (40) avec une cavité de réception ;
une sphère creuse (10), qui est située dans la cavité de réception de la coque externe (40) et peut tourner dans la cavité de réception, ladite surface hémisphérique inférieure de la sphère (10) étant dotée d'une rainure (11) avec un plan médian symétrique situé sur le plan médian vertical de la sphère (10) ;
une broche de limitation (20), qui est insérée verticalement dans la coque externe (40) et située sous la sphère (10), et dont la ligne d'axe passe par le centre de la sphère (10) ;
un premier ensemble engrenage à vis sans fin (30), qui est prévu dans la coque externe (40) destiné à entraîner la broche de limitation (20) pour effectuer un mouvement de va-et-vient linéaire dans la direction verticale ;
ledit premier ensemble engrenage à vis sans fin (30) entraînant le sommet de la broche de limitation (20) pour qu'il soit inséré dans la rainure (11) ou sorti de celle-ci pour réaliser le réglage du degré de liberté de rotation de la sphère (10) ;
la structure de joint à rotule commutable à deux degrés de liberté et à trois degrés de liberté comprend en outre un ensemble ressort de torsion (90) qui est prévu dans la cavité creuse de la sphère (10) et correspond au sommet de la broche de limitation (20) afin que la sphère (10) soit réinitialisée ;
l'ensemble ressort de torsion (90) comprend un siège de ressort de torsion (91) fixé à la cavité creuse de la sphère (10), un ressort de torsion (92) possédant un premier bras de support (921) et un second bras de support (922) et relié de manière pivotante au siège de ressort de torsion (91) par l'intermédiaire d'un arbre de pivot (93), et un boulon de limitation (94) fixé au siège de ressort de torsion (91) et situé entre le premier bras de support (921) et le second bras de support (922), ledit axe de pivotement du ressort de torsion (92) étant perpendiculaire au plan médian vertical où est située la rainure (11), lorsque le sommet de la broche de limitation (20) est inséré dans la rainure (11) et tourne la sphère (10), la broche de limitation (20) pousse le premier bras de support (921) ou le second bras de support (922) le long de la direction de distribution de la rainure (11).

2. Structure de joint à rotule commutable à deux degrés de liberté et à trois degrés de liberté selon la revendication 1, ledit premier ensemble engrenage à vis sans fin (30) comprenant un premier pignon de vis sans fin (31) et une première vis (32), une première cavité de pignon de vis sans fin (412) et une première cavité de vis (413) qui communiquent l'une avec l'autre étant formées dans la coque externe (40), un trou anti-rotation (411) dans lequel la broche de limitation (20) est insérée étant en outre formé dans la coque externe (40), ledit trou anti-rotation (411) étant en communication avec la cavité de réception de la coque externe (40) située au-dessus de celui-ci et la première cavité de pignon de vis sans fin (412) situé en dessous de celui-ci, la broche de limitation (20) comprend un cylindre (21) qui est inséré dans le trou anti-rotation (411) et une courte broche (22) qui est formée sur le sommet du cylindre (21) et peut être insérée dans la sphère (10), ledit premier pignon de vis sans fin (31) étant relié par filetage au cylindre (21), et un plan d'arrêt de rotation (211) correspondant au trou anti-rotation (411) étant en outre formé sur la paroi circonférentielle externe du cylindre (21).

3. Structure de joint à rotule commutable à deux degrés de liberté et à trois degrés de liberté selon la revendication 1, ladite coque externe (40) comprenant une coque de base (41) formée avec la cavité de réception et une bague de sommet (42) serrée sur l'extrémité ouverte du sommet de la coque de base (41), un tampon anti-poussière (50) étant intercalé entre la bague de sommet (42) et la surface sphérique de la sphère (10), une rainure annulaire (51) étant formée sur la paroi de bague interne du tampon anti-poussière (50), et la valeur d'ouverture M du sommet de la bague interne du tampon anti-poussière (50) étant inférieure à la valeur de diamètre N de la surface sphérique correspondant au sommet du tampon anti-poussière (50) sur la sphère (10), afin que le sommet du tampon anti-poussière (50) soit tendu sur la sphère (10) sous l'action de la rainure annulaire (51).

4. Structure de joint à rotule commutable à deux degrés de liberté et à trois degrés de liberté selon la revendication 1, comprenant en outre un siège de rotule (60) situé dans une cavité de réception de la coque externe (40) destiné à supporter la sphère (10), et une garniture (70) est intercalée entre le siège de rotule (60) et la sphère (10), un premier trou traversant, à travers lequel la broche de limitation (20) passe, est formé au fond du siège de rotule (60) et la garniture (70) respectivement.

5. Structure de joint à rotule commutable à deux degrés de liberté et à trois degrés de liberté selon la revendication 4, comprenant en outre un second ensemble engrenage à vis sans fin (80) prévu sur la coque externe (40) destiné à régler la taille de l'espace entre le siège de rotule (60) et la garniture (70) pour verrouiller et positionner la sphère (10).

6. Structure de joint à rotule commutable à deux degrés de liberté et à trois degrés de liberté selon la revendication 5, ledit second ensemble engrenage à vis sans fin (80) comprenant un second pignon de vis sans fin (81) prévu au fond de la cavité de réception de la coque externe (40), une seconde vis (82) située dans la coque externe (40) et s'engrenant avec le second pignon de vis sans fin (81), et une entretoise à triple surface hélicoïdale (84) fixée au sommet du second pignon de vis sans fin (81), une bague convexe à triple surface hélicoïdale (61) qui vient en butée contre l'entretoise à triple surface hélicoïdale (84) étant formée au fond du siège de rotule (60), l'entretoise à triple surface hélicoïdale (84) et la bague convexe à triple surface hélicoïdale (61) coopérant vers le haut et vers le bas pour former un cylindre creux, et lorsque le second pignon de vis sans fin (81) entraîne l'entretoise à triple surface hélicoïdale (84) pour qu'elle tourne sous l'action de la seconde vis (82), l'entretoise à triple surface hélicoïdale (84) forçant la bague convexe à triple surface hélicoïdale (61) à s'élever afin que le siège de rotule (60) soit en butée sous la sphère (10).

7. Structure de joint à rotule commutable à deux degrés de liberté et à trois degrés de liberté selon la revendication 6, une pluralité d'ouvertures de guidage (62) étant également formées sur le bord de sommet du siège de bille (60), et une pluralité de montants de guidage verticaux (415) correspondant à l'ouverture de guidage (62) étant formés sur la paroi de cavité de la cavité de réception de la coque externe (40).

8. Structure de joint à rotule commutable à deux degrés de liberté et à trois degrés de liberté selon la revendication 6, ladite entretoise à triple surface hélicoïdale (84) comprenant une bague de base, ladite partie de sommet de la bague de base étant également divisée en trois blocs en arc de cercle, une première surface hélicoïdale étant formée au sommet des blocs en arc de cercle ; ladite bague convexe à triple surface hélicoïdale (61) comprenant un corps de bague convexe, ladite partie inférieure du corps de bague convexe étant également divisée en trois blocs en arc de cercle, et une seconde surface hélicoïdale qui se conforme à la première surface hélicoïdale étant formée au fond de les blocs en arc de cercle.
